# FASCICULE DE BREVET EUROPEEN

(11) **EP 0 984 897 B1**
(45) Date de publication et mention de la délivrance du brevet: **16.05.2001**
(21) Numéro de dépôt: 98928364.3
(22) Date de dépôt: 27.05.1998
(51) Int. Cl.: C01B 15/013, B01J 39/04

(54) **PROCEDE DE PREPARATION D'UNE SOLUTION ULTRA-PURE DE PEROXYDE D'HYDROGENE PAR ECHANGE IONIQUE EN PRESENCE D'IONS ACETATE**
VERFAHREN ZUR HERSTELLUNG EINER HOCHREINEN WASSERSTOFFPEROXIDLÖSUNG MITTELS IONENAUSTAUSCH IN ANWESENHEIT VON ACETATIONEN
METHOD FOR PREPARING AN ULTRAPURE HYDROGEN PEROXIDE SOLUTION BY ION EXCHANGE IN THE PRESENCE OF ION ACETATE

(30) Priorité: 27.05.1997 FR 9706469
(43) Date de publication de la demande: 15.03.2000
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: DEVOS, Christine, F-78000 Versailles (FR); LEDON, Henry, F-78000 Versailles (FR)
(74) Mandataire: Conan, Philippe Claude
(86) Numéro de dépôt international: FR9801055
(87) Numéro de publication internationale: WO9854085

(56) Documents cités:
- EP-A- 0 774 442
- WO-A-96/39237
- DD-A- 51 025
- US-A- 3 074 782
- PATENT ABSTRACTS OF JAPAN vol. 097, no. 007, 31 juillet 1997 & JP 09 071406 A (MITSUBISHI GAS CHEM CO INC), 18 mars 1997

## Description

L'utilisation du peroxyde d'hydrogène pour les applications de hautes technologies ou les applications dans l'industrie alimentaire, dans l'hygiène, ou la santé, requiert des produits de plus en plus purs qui doivent répondre à des spécifications de plus en plus contraignantes et nombreuses. En particulier, les demandes des utilisateurs se portent vers des solutions de peroxyde d'hydrogène dans lesquelles les teneurs de chaque impureté métallique sont inférieures à une partie par milliard (ppb) et, de préférence, inférieures à 500 parties par mille milliard (ppt). Dans l'exposé suivant, on appellera de telles solutions, des solutions ultra-pures de peroxyde d'hydrogène.

Il est bien connu, selon l'art antérieur, qu'il est possible d'éliminer certaines impuretés par passage de la solution sur un lit d'adsorbants échangeurs d'ions. On peut citer par exemple, les polymères de type polystyrène /divinylbenzène fonctionnalisés, les silices, les aluminosilicates, en particulier les variétés à micropores contrôlés tels que les zéolithes ou les charbons actifs ; ces solides portent des groupes fonctionnels capables de complexer soit des cations, soit des anions. A titre d'exemples de groupes fonctionnels capables de complexer les cations, on peut citer les groupes carboxyliques, sulfoniques, phosphoniques, hydroxydes, oxyde d'amine, oxyde de phosphine, ou encore les polyoxaalkyles cycliques ou ouverts, tels que par exemple les polymères d'oxyde d'éthylène. A titre d'exemples de groupes fonctionnels capables de complexer les anions, on peut citer les groupes ammonium quaternaires ou phosphonium quaternaires. Ces adsorbants peuvent également être obtenus par polymérisation d'un monomère portant un groupe fonctionnel, par exemple les acides polyméthacryliques, les acides polyvinylphosphoniques, les polyvinylpyridines, les polyvinylpyrrolidones, les alcools polyvinyliques, les polylactones saponifiées ou les copolymères contenant ces motifs. Les adsorbants les plus souvent décrits, sont, les polystyrènes gels ou réticulés possédant des groupes fonctionnels sulfoniques -SO₃H ou triméthylammonium (CH₃)₃N⁺-.

De nombreuses combinaisons ont été proposées telles que, par exemple, résine anionique puis résine cationique ou résine cationique puis résine anionique, ou encore résine anionique puis résine cationique puis "lit mélangé" cationique + anionique. Des ajouts dans les phases inter-stades sont également décrits, comme par exemple, l'addition d'acide pour modifier le pH ou l'addition d'agents chélatants, tels que les dérivés aminométhylène-carboxyliques ou aminométhylènephosphoniques.

Il est bien connu de l'homme du métier que l'emploi d'adsorbants échangeurs d'anions présente de grandes difficultés de mise en oeuvre pour la purification du peroxyde d'hydrogène. En particulier, la forme hydroxyde, sous laquelle ces produits sont généralement disponibles industriellement, ne peut être utilisée directement à cause de sa trop forte basicité, conduisant à une décomposition importante du peroxyde d'hydrogène. De nombreuses publications décrivent l'utilisation d'adsorbants échangés par les ions carbonate ou bicarbonate, moins basiques, pour limiter la décomposition d'hydrogène, sans toutefois la supprimer complètement.

Il est impératif de pouvoir contrôler ce phénomène de décomposition du peroxyde d'hydrogène sur les lits d'adsorbants, car cette décomposition avec dégagement d'oxygène gazeux étant exothermique, la vitesse est accélérée selon la loi bien connue d'Arhénius. La formation d'une poche de gaz peut encore aggraver le phénomène puisqu'en éloignant le liquide du point de décomposition, la chaleur dégagée ne peut plus être éliminée par vaporisation de l'eau et l'on perd l'effet flegmatisant du liquide. Un tel processus est caractéristique d'une réaction divergente qui peut conduire à une réaction extrêmement violente de décomposition autoaccélérée, d'autant plus dangereuse qu'elle est fortement exothermique et produit de l'oxygène gazeux, donc avec une force d'expansion considérable pouvant conduire à des explosions.

L'objet de la présente invention est donc d'obtenir des solutions ultra-pures de peroxyde d'hydrogène, tout en limitant le risque de décomposition violente de celui-ci lors des étapes de purification.

La présente invention a pour objet un procédé de préparation d'une solution ultra-pure de peroxyde d'hydrogène, caractérisé en ce que :
a) il comprend au moins une séquence incluant le passage de la solution à purifier sur au moins un lit d'adsorbants échangeurs d'anions (AEA), et au moins un lit d'adsorbants échangeurs de cations (AEC)
b) au moins un lit d'adsorbants échangeurs d'anions contient des ions carboxylate de formule R-COO⁻ dans lequel R représente un atome d'hydrogène, un radical aryle comportant de 6 à 10 atomes de carbone, ou un radical alkyle comportant de 1 à 4 atomes de carbone , lesdits radicaux aryle et alkyle étant soit non substitués soit substitués par un ou plusieurs atomes de fluor, et
c) le premier lit (AEA) que traverse la solution à purifier est un lit contenant des ions carboxylates de formule R-COO⁻.

Par ion carboxylate de formule R-COO⁻, on entend notamment l'ion trifluoroacétate ou l'ion benzoate, l'ion formate, l'ion acétate, l'ion fluoroacétate et, de préférence, l'ion acétate.

La solution de peroxyde d'hydrogène à épurer selon la présente invention est une solution aqueuse industrielle ayant une concentration de 1 à 70 % en poids et de préférence de 5 à 50 % en poids. Les adsorbants sont choisis parmi ceux qui sont décrits ci-dessus.

Les lits d'adsorbants présentent chacun un rapport hauteur sur diamètre compris entre 0,5 et 50, de préférence supérieur à 3, notamment entre 5 et 10 et, plus particulièrement, égal à 6.

Les débits de solution de peroxyde d'hydrogène, exprimés en volume de solution/heure passée par volume de lit d'adsorbant, peuvent varier entre 0,5 et 100, de préférence de 1 à 50 et plus particulièrement de 10 à 30.

De préférence, les adsorbants échangeurs d'anions seront alimentés en mode ascendant, tandis que les lits adsorbants échangeurs de cations seront alimentés en mode descendant. Il est possible de définir les géométries des lits pour que les débits et/ou les vitesses spatiales vraies dans chaque adsorbant soient optimisés.

Il est également possible de travailler sous pression; on choisira de préférence une pression de travail inférieure à 5 atmosphères relatifs.

La température de la solution à purifier selon le procédé tel que décrit précédemment est inférieure ou égale à 30°C et, de préférence, comprise entre -10°C et +10°C.

Dans une variante préférée du procédé tel que défini précédemment, la séquence de passage sur les lits adsorbants d'ions de la solution à purifier, commence par un passage sur un lit d'adsorbants d'anions (AEA) et se poursuit par un passage sur un lit d'adsorbants de cations (AEC).

Dans une autre variante du procédé tel que défini précédemment, celui-ci comprend en amont ou en aval de séquences de passage sur les lits d'adsorbants échangeurs d'ions de la solution à purifier, une ou plusieurs étapes de purification telles que par exemple la distillation l'extraction liquide, la cristallisation, l'absorption, la filtration, l'ultra-filtration, la nanofiltration, ou l'osmose inverse. Le cas échéant, la solution initiale est préalablement mise au titre désiré puis purifiée. Selon le degré de pureté et de dilution de la solution de peroxyde d'hydrogène à purifier, on met en oeuvre une ou plusieurs de ces étapes complémentaires.

Dans une première variante préférée de la présente invention, la solution de peroxyde d'hydrogène industrielle à purifier qui est à une concentration de 30 % à 70 %, en poids, est préalablement distillée et mise au titre désiré, puis épurée sur au moins deux lits d'adsorbants échangeurs d'ions, selon la séquence objet de la présente invention.

Selon une deuxième variante du procédé de purification, objet de la présente invention, une solution de peroxyde d'hydrogène de qualité industrielle ou de qualité dite "alimentaire" ayant une concentration d'environ 50 à 70 % en poids subit le traitement préalable suivant: une première étape de distillation/concentration pour obtenir un condensât ayant une concentration supérieure à 80%, plus une première purification par cristallisation à basse température et l'élimination du surnageant. Les cristaux recueillis sont lavés, essorés, puis fondus et la solution obtenue est diluée à 30 ou 35% par de l'eau déionisée de qualité électronique ultra-pure.

Dans une troisième variante préférée de la présente invention, en particulier, si la teneur en carbone de la solution de peroxyde d'hydrogène est une contrainte faisant partie intégrante des spécifications exigées, un second lit d'adsorbants échangeurs d'anions pourra être ajouté à la chaîne de purification pour retenir les ions carboxylates libérés par la complexation des impuretés métalliques dans le premier lit d'adsorbants échangeurs d'anions.

On peut ainsi très facilement obtenir, à partir d'une qualité banale industrielle, une solution de peroxyde d'hydrogène de qualité "électronique" contenant moins de 200 ppt de chacun des cations métalliques des colonnes IA à VIIA (à l'exclusion de l'oxygène) et des colonnes IB à VIII du tableau de la classification périodique des éléments.

A titre d'illustration du procédé de purification, objet de la présente invention, on peut citer par exemple l'enchaînement de séquences : AEA(acétate)/AEC/AEA (bicarbonate ou carbonate)/AEC.

L'invention a aussi pour objet une installation pour la mise en oeuvre du procédé tel que défini précédemment.

Dans une variante préférée de la présente installation, les lits d'adsorbants échangeurs d'anions sont alimentés en mode ascendant et les lits d'adsorbants échangeurs de cations sont alimentés en mode descendant.

Dans une autre variante préférée de l'installation, celle-ci est située sur le site du client tel que, par exemple, un site de fabrication de composants électroniques, et reliée directement au point d'utilisation du peroxyde d'hydrogène par ledit client. Dans cette variante la solution de peroxyde d'hydrogène à purifier peut provenir d'un réservoir de stockage situé sur le même site, ou bien est fabriqué sur ce même site grâce à une unité de production, dite « on site ».

Les exemples suivants illustrent l'invention sans toutefois la limiter.

### EXEMPLE A : Etude de stabilité

Il a été montré que le phénomène d'amorçage de réaction violente de décomposition par simple chauffage d'un lit de résine échangeuses d'anions sous forme de bicarbonate de triméthyl ammonium (Dowex A 550 UPE) en présence d'une solution aqueuse à 30% de peroxyde d'hydrogène à température modérée, par exemple 30 à 35°C, pendant quelques dizaines de minutes, est beaucoup plus rapide avec une résine ayant été utilisée pour la purification du peroxyde, qu'avec une résine fraîchement échangée. Si l'on prend comme paramètre d'évaluation le "TMR" (time to maximum rate) qui indique, à une température donnée, la période d'induction avant l'amorçage de la décomposition explosive, les résultats suivants ont été obtenus :
résine neuve:
   T=56°C: TMR=15 mn; T=51°C: TMR=30 mn; T=44°C: TMR=60 mn
résine usagée:
   T=41°C: TMR=15 mn; T=35°C: TMR=30 mn; T=32°C: TMR=60 mn

Il est donc évident qu'une résine usagée est beaucoup plus sensible aux phénomènes d'autodécomposition du peroxyde d'hydrogène, probablement à cause de l'effet catalytique des espèces métalliques échangées au cours de la purification.

Dans les mêmes conditions, on n'observe aucun phénomène de décomposition lorsque une résine échangeuse d'anions sous forme d'acétate est chauffée pendant 12 heures à 45°C en présence d'une solution aqueuse à 30 % de peroxyde d'hydrogène.

### EXEMPLE B :

a) Exemple comparatif
   Une unité de purification comporte deux colonnes remplies respectivement de 3 litres d'une résine échangeuse d'anions Dowex Monosphère. A 550 UPE qui a été préalablement échangée par une solution de bicarbonate de sodium et lavée à l'eau et 3 litres d'une résine échangeuse de cations Dowex Monosphère C 650 UPN. Le diamètre des colonnes est environ égal à 11,7 centimètres, ce qui donne une hauteur de 28 centimètres. 900 litres d'une solution aqueuse de peroxyde d'hydrogène à 30 % en poids (solution A), obtenue par dilution par de l'eau ultra-pure d'une solution commerciale à 60 % en poids sont introduits avec un débit de 130 litres par heure, en mode ascendant dans la première colonne chargée en lit (AEA) puis en mode descendant dans la deuxième colonne chargée en lit (AEC). On obtient la solution B.
b) Exemple selon l'invention
   On opère comme à l'exemple précédent à partir d'un nouvel échantillon de 900 litres de la solution A mais en échangeant préalablement la résine échangeuse d'anions Dowex Monosphère A 500 UPE par une solution d'acétate de sodium.
   On obtient la solution C.
   L'analyse de ces trois solutions en vue de déterminer les concentrations exprimées en ppt, des principaux contaminants, conduit aux résultats suivants : 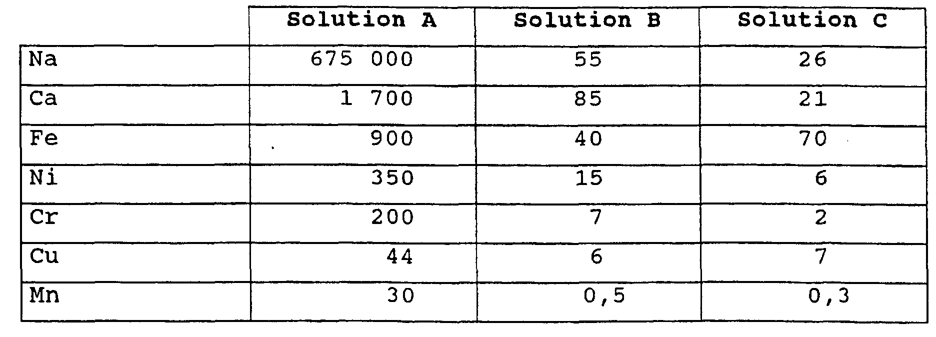 Les exemples précédents démontrent que la décomposition du peroxyde d'hydrogène sur un lit (AEA) sous forme acétate, est bien plus faible que celle observée sur une résine échangée sous forme (bicarbonate ou carbonate); ils démontrent aussi que les éléments susceptibles de décomposer H₂O₂ à savoir Fe, Ni, Cr, Cu et Mn sont parfaitement retenus sur ce même lit (AEA).

## Revendications

1. Procédé de préparation d'une solution ultra-pure de peroxyde d'hydrogène caractérisé en ce qu'il comprend au moins deux séquences successives dont la première inclut un passage de la solution de peroxyde d'hydrogène à purifier sur un lit d'adsorbants échangeurs d'anions contenant des ions carboxylates de formule R-COO⁻, suivi d'un passage sur un lit d'adsorbants échangeurs de cations, et la deuxième inclut un passage sur un lit d'adsorbants échangeurs d'anions contenant des ions bicarbonate ou carbonate et un passage sur un lit d'adsorbants échangeurs de cations.

2. Procédé tel que défini à la revendication 1 pour lequel l'ion R-COO est l'ion formate, l'ion acétate, l'ion fluoroacétate, l'ion trifluoroacétate ou l'ion benzoate et de préférence l'ion acétate.

3. Procédé tel que défini à l'une des revendications 1 ou 2, comprenant en amont et/ou en aval de la séquence de passage sur les lits d'adsorbants échangeurs d'ions de la solution à purifier, une ou plusieurs étapes de purification telle que la distillation, l'extraction liquide, la cristallisation, l'absorption, la filtration, l'ultrafiltration, la nanofiltration, ou l'osmose inverse et si désiré une mise au titre préalable de la solution initiale à purifier.

4. Procédé tel que défini à la revendication 3 dans lequel la solution de peroxyde d'hydrogène industrielle à purifier, qui est à une concentration de 30 % à 70 % en poids, est préalablement distillée et mise au titre désiré.

5. Procédé tel que défini à la revendication 3 dans lequel une solution de peroxyde d'hydrogène de qualité industrielle ou de qualité dite "alimentaire" ayant une concentration d'environ 50 à 70 % en poids subit le traitement préalable suivant : une première étape de distillation/concentration pour obtenir un condensat ayant une concentration supérieure à 80%, plus une première purification par cristallisation à basse température et l'élimination du surnageant. Les cristaux recueillis sont lavés, essorés, puis fondus et la solution obtenue est diluée à 30 ou 35% par de l'eau déionisée de qualité électronique ultra-pure.

6. Procédé selon l'une des revendications 1 à 5, caractérisé en ce que chacun des lits d'adsorbants présente un rapport hauteur sur diamètre supérieur à 3, notamment entre 5 et 10 et, plus particulièrement, égal à 6.

7. Installation pour la mise en oeuvre du procédé tel que décrit à l'une des revendications 1 à 6, caractérisée en ce qu'elle est située sur le site d'utilisation de la solution ultra-pure de peroxyde d'hydrogène et notamment sur le site de fabrication de composants électroniques.

8. Installation telle que décrite à la revendication 7 dans laquelle les lits d'adsorbants échangeurs d'anions sont alimentés en mode ascendant et les lits d'adsorbants échangeurs de cations sont alimentés en mode descendant.

## Claims

1. Process for the preparation of an ultrapure hydrogen peroxide solution, characterized in that it comprises at least two successive sequences, the first of which includes passing the hydrogen peroxide solution to be purified through a bed of anion-exchange adsorbents containing acetate carboxylate ions of formula R-COO⁻, followed by passing through a bed of cation-exchange adsorbents, and the second of which includes passing through a bed of anion-exchange adsorbents containing bicarbonate or carbonate ions and passing through a bed of cation-exchange adsorbents.

2. Process as defined in Claim 1, in which the R-COO⁻ ion is the formate ion, the acetate ion, the fluoroacetate ion, the trifluoroacetate ion or the benzoate ion, and preferably the acetate ion.

3. Process as defined in one of Claims 1 or 2, comprising, upstream and/or downstream of the sequence for passing the solution to be purified through the beds of ion-exchange adsorbents, one or more purification stages, such as distillation, liquid extraction, crystallization, absorption, filtration, ultrafiltration, nanofiltration or reverse osmosis, and, if desired, a prior operation in which the starting solution to be purified is brought to the desired assay.

4. Process as defined in Claim 3, in which the technical hydrogen peroxide solution to be purified, which is at a concentration of 30% to 70% by weight, is distilled and brought to the desired assay beforehand.

5. Process as defined in Claim 3, in which a hydrogen peroxide solution of technical quality or of so-called "food" quality, having a concentration of approximately 50 to 70% by weight, is subjected to the following pretreatment: a first distillation/concentration stage, in order to obtain a condensate having a concentration of greater than 80%, plus a first purification by low-temperature crystallization and the removal of the supernatant. The crystals collected are washed, superficially dried and then melted and the solution obtained is diluted to 30 or 35% with deionized water of ultrapure electronic quality.

6. Process according to one of Claims 1 to 5, characterized in that each of the beds of adsorbents exhibits a height to diameter ratio of greater than 3, in particular between 5 and 10 and more particularly of

7. Plant for the implementation of the process as described in one of Claims 1 to 6, characterized in that it is situated on the site of use of the ultrapure hydrogen peroxide solution and in particular on the site for the manufacture of electronic components.

8. Plant as described in Claim 7, in which the beds of anion-exchange adsorbents are fed in upward mode and the beds of cation-exchange adsorbents are fed in downward mode.

## Patentansprüche

1. Verfahren zur Herstellung einer ultrareinen Wasserstoffperoxidlösung, dadurch gekennzeichnet, daß man dabei mindestens zwei aufeinanderfolgende Sequenzen durchführt, wobei die erste Sequenz das Durchleiten der zu reinigenden Wasserstoffperoxidlösung durch eine Anionenaustauscher-Adsorptionsmittelschüttung mit Carboxylationen der Formel RCOO⁻ und nachfolgendes Durchleiten durch eine Kationenaustauscher-Adsorptionsmittelschüttung umfaßt und die zweite Sequenz das Durchleiten durch eine Anionenaustauscher-Adsorptionsmittelschüttung mit Hydrogencarbonat- oder Carbonationen und das Durchleiten durch eine Kationenaustauscher-Adsorptionsmittelschüttung umfaßt.

2. Verfahren nach Anspruch 1, bei dem es sich bei dem RCOO⁻-Ion um das Formiat-, Acetat-, Fluoracetat-, Trifluoracetat- oder Benzoation und vorzugsweise das Acetation handelt.

3. Verfahren nach Anspruch 1 oder 2, bei dem man einen oder mehrere, der Sequenz des Durchleitens der zu reinigenden Lösung durch die Ionenaustauscher-Adsorptionsmittelschüttungen vor- und/oder nachgeschaltete Reinigungsschritte wie Destillation, Flüssigkeitsextraktion, Kristallisation, Absorption, Filtration, Ultrafiltration, Nanofiltration, oder Umkehrosmose durchführt und gegebenenfalls vorher die zu reinigende Ausgangslösung auf den gewünschten Gehalt bringt.

4. Verfahren nach Anspruch 3, bei dem man die zu reinigende technische Wasserstoffperoxidlösung, die eine Konzentration von 30 bis 70 Gew.-% aufweist, vorher destilliert und auf den gewünschten Gehalt bringt.

5. Verfahren nach Anspruch 3, bei dem man eine Wasserstoffperoxidlösung von technischer oder "Lebensmittel"-Qualität mit einer Konzentration von etwa 50 bis 70 Gew.-% der folgenden Vorbehandlung unterwirft: einem ersten Destillations-/Konzentrationsschritt unter Erhalt eines Kondensats mit einer Konzentration von mehr als 80% sowie einer ersten Reinigung durch Tieftemperaturkristallisation und Abtrennung des Überstands; die gesammelten Kristalle werden gewaschen, entwässert und dann aufgeschmolzen, und die erhaltene Lösung wird mit entionisiertem Wasser von ultrareiner elektronischer Qualität auf 30 bis 35% verdünnt.

6. Verfahren nach einem der Ansprüche 1 bis 5, dadurch gekennzeichnet, daß jede der Adsorptionsmittelschüttungen ein Verhältnis von Höhe zu Durchmesser von mehr als 3, insbesondere zwischen 5 und 10 und ganz besonders von 6, aufweist.

7. Vorrichtung zur Durchführung des Verfahrens gemäß einem der Ansprüche 1 bis 6, dadurch gekennzeichnet, daß sie sich am Verwendungsort der ultrareinen Wasserstoffperoxidlösung und insbesondere am Ort der Fertigung von Elektronikbauteilen befindet.

8. Vorrichtung nach Anspruch 7, bei der die Anionenaustauscher-Adsorptionsmittelschüttungen von unten nach oben und die Kationenaustauscher-Adsorptionsmittelschüttungen von oben nach unten beschickt werden.
